Europäisches Patentamt

European Patent Office

Office européen des brevets

(19)

(11) Numéro de publication: **0 007 840**
**B1**

(12) **FASCICULE DE BREVET EUROPEEN**

(45) Date de publication du fascicule du brevet: **05.05.82**

(51) Int. Cl.³: **C 22 C 23/06, F 17 C 11/00**

(21) Numéro de dépôt: **79400470.5**

(22) Date de dépôt: **06.07.79**

(54) **Nouveau procédé pour le stockage et l'utilisation de l'hydrogène, notamment dans les moteurs.**

(30) Priorité: **07.07.78 FR 7820382**

(43) Date de publication de la demande:
**06.02.80 Bulletin 80/3**

(45) Mention de la délivrance du brevet:
**05.05.82 Bulletin 82/18**

(84) Etats contractants désignés:
**DE GB IT SE**

(56) Documents cités:
**FR - A - 2 278 781**
**US - A - 3 315 479**

(73) Titulaire: **ANVAR Agence Nationale de Valorisation de la Recherche**
**13, rue Madeleine Michelis**
**F-92522 Neuilly-sur-Seine (FR)**

(72) Inventeur: **Pezat, Michel**
**Le Breyra Martillac**
**F-33650 La Brede (FR)**
Inventeur: **Darriet, Bernard**
**Saucats**
**F-33650 La Brede (FR)**
Inventeur: **Hbika, Abdelmalek**
**Souika Berrima Derb Rouane No 11**
**Meknes (MA)**
Inventeur: **Hagenmuller, Paul Laboratoire Chimie du Solide**
**du C.N.R.S. 351 Cours de la Libération**
**F-33405 Talence Cedex (FR)**

(74) Mandataire: **Peaucelle, Chantal et al,**
**Cabinet Plasseraud 84, rue d'Amsterdam**
**F-75009 Paris (FR)**

Courier Press, Leamington Spa, England.

**0 007 840**

Nouveau procédé pour le stockage et l'utilisation de l'hydrogène,
notamment dans les moteurs

L'invention est relative à un procédé pour le stockage de l'hydrogène sous forme d'hydrures métalliques et à l'application de ces hydrures, notamment dans les moteurs ou autres récepteurs ou transformateurs d'énergie utilisant l'hydrogène.

Elle est plus particulièrement relative à un procédé de stockage d'hydrogène à l'aide d'alliages métalliques de magnésium capables de réagir avec l'hydrogène en conduisant à des hydrures dissociables. Elle a également pour objet la fabrication de ces alliages.

Divers systèmes métal-hydrure métallique ont été étudiés au regard de leurs possibilités d'application comme moyens pour le stockage de l'hydrogène.

Le système à base de titane (Ti) et de fer (Fe) TiFe-TiFeH a plus particulièrement retenu l'attention et fait l'objet d'applications industrielles. Mais il présente l'inconvénient d'être lourd et assez cher.

La recherche de systèmes plus légers a conduit à étudier le magnésium Mg et son hydrure $MgH_2$. Le magnésium présente, outre l'avantage d'être léger, celui d'être abondant, d'avoir un faible prix de revient et de conduire à un hydrure possédant une capacité massique en hydrogène élevée. Mais, à côté de ces qualités de grand intérêt, il présente l'inconvénient de réagir avec l'hydrogène, pour former l'hydrure $MgH_2$, à des températures et sous des pressions relativement élevées.

Des travaux précédents de certains des co-inventeurs de la présente invention ont montré que les conditions d'obtention de l'hydrure de magnésium peuvent être considérablement améliorées par mélange du magnésium avec d'autres métaux et/ou alliages, plus particulièrement des métaux et/ou alliages conduisant à des hydrures se formant et se décomposant à des pressions et températures ordinaires.

La poursuite des travaux dans ce domaine a conduit les présents inventeurs à améliorer encore les performances de systèmes renfermant du magnésium en mettant en oeuvre ce dernier sous forme d'alliages constitués à l'aide d'éléments métalliques particuliers.

L'invention vise donc un nouveau procédé de stockage de l'hydrogene selon lequel on met en contact de l'hydrogène, dans des conditions de température et de pression autorisant la formation des hydrures désirés, avec au moins un alliage de formule I:

$$L_{a-ax}T_{ax}Mg_{b-by}M_{by} \qquad \text{(I)}$$

dans laquelle:

L représente un élément choisi parmi les lanthanides, plus spécialement le lanthane (La), le cérium (Ce), le praséodyme (Pr) et le néodyme (Nd), ou encore parmi les alliages à base de cérium,

T représente un élément choisi parmi les métaux du groupe IIa, plus particulièrement parmi le calcium (Ca), le strontium (Sr) et le baryum (Ba),

M représente un élément choise parmi les métaux de transition, l'aluminium (Al), le silicium (Si) et l'étain (Sn),

$x$ est un nombre de 0 à 1 compris,

$y$ est un nombre de 0 à 1 compris et $a$ et $b$ sont les indices correspondant à la stoechiométrie des éléments dans l'alliage, sous réserve que, lorsque $x$ et $y$ sont égaux à 0, les indices $a$ et $b$ soient respectivement différents de 1 et 1, 1 et 3, 2 et 17 et, lorsque $x$ est égal à 0 et que $a$ et $b$ sont respectivement égaux à 1 et 2 ou 1 et 3 ou 2 et 17, M ne représente pas Ni.

Les alliages de formule I mis en oeuvre selon l'invention renferment de manière avantageuse une proportion atomique prépondérante de magnésium et permettent ainsi une large mise à profit des propriétés et qualités du magnésium évoquées ci-dessus.

Selon un aspect de grand intérêt, grâce aux éléments métalliques entrant, avec le magnésium, dans leur composition, ils réagissent aisément et rapidement avec l'hydrogène, généralement dès la température ambiante.

La capacité massique en hydrogène des hydrures formés est élevée et de l'ordre de 5% pour la plupart; elle peut atteindre avec certains hydrures des valeurs de l'ordre de 6% comme illustré par les exemples donnés dans la suite de la description.

A ces performances, s'ajoute l'avantage de ces alliages de conduire à des hydrures aisément dissociables, en particulier plus facilement dissociables que $MgH_2$ seul ou en mélange avec des hydrures de métaux et/ou d'alliages.

Selon un mode de réalisation du procédé de l'invention, on met en oeuvre au moins un alliage de magnésium choisi dans une famille d'alliages binaires.

Une famille préférée comprend les alliages de formule I dans laquelle les indices $x$ et $y$ sont nuls et qui sont donc formés comme éléments constitutifs par L et Mg.

De tels alliages binaires répondent à la formule II:

$$L_aMg_b \qquad \text{(II)}$$

dans laquelle L, $a$ et $b$ présentent les significations déjà indiquées.

2

Une autre famille d'alliages binaires utilisables dans le procédé selon l'invention comprend les alliages dans lesquels l'élément constitutif accompagnant Mg est l'élément T. Dans ce cas, l'indice $x$ de la formule I est égal à 1, tandis que $y$ est égal à zéro.

Ces alliages, qui présentent entre autres l'intérêt de conduire à des hydrures de faible prix de revient et possédant une capacité massique élevée en hydrogène, sont illustrés par la formule III:

$$T_aMg_b \qquad \text{(III)}$$

dans laquelle T, $a$ et $b$ présentent les significations sus-indiquées.

Dans un autre mode préféré de réalisation du procédé de l'invention, on met en oeuvre des alliages de magnésium comprenant des alliages ternaires ou quaternaires. Dans ces alliages, le remplacement partiel de l'élément L et/ou de Mg par les métaux de substitution rapportés plus haut, permet, notamment en modifiant l'électropositivité du réseau cationique de faire évoluer le caractère de la liaison métal-hydrogène dans les hydrures correspondants et, par voie de conséquence, d'influer sur la stabilité de ces hydrures de mainière à augmenter leur vitesse de décomposition.

Dans des alliages ternaires utilisés dans le procédé de l'invention, l'élément L est partiellement substitué par T, ce qui correspond à des alliages de formule IV:

$$L_{a-ax}T_{ax}Mg_b \qquad \text{(IV)}$$

dans laquelle L, T, $a$ et $b$ présentent les significations sus-indiquées et $x$ est un nombre compris entre 0 et 1.

La substitution partielle par T conduit à des hydrures qui, outre l'avantage d'une capacité massique élevée, sont d'un faible prix de revient.

D'autres familles d'alliages ternaires correspondent au cas où Mg est partiellement substitué par l'élément M, ce qui correspond d'une manière générale à des alliages donnant des hydrures plus aisément dissociables.

Dans la formule I, l'indice $x$ est alors égal à 1 et l'indice $y$ représente un nombre non nul, compris entre 0 et 1.

Ces alliages répondent à la formule V:

$$T_aMg_{b-by}M_{by} \qquad \text{(V)}$$

Selon une variante, $x$ dans la formule I est égal à 0, $y$ représentant un nombre non nul, compris entre 0 et 1. Les alliages ternaires correspondants présentent la formule VI:

$$L_aMg_{b-by}M_{by} \qquad \text{(VI)}$$

Dans ces formules V ou VI, L, T, M, $a$, et $b$ sont tels que définis en rapport avec la formule I et $y$ est un nombre non nul, inférieur à 1.

Dans les alliages quaternaires utilisés dans l'invention, chacun des éléments constitutifs est partiellement substitué, ce qui permet d'optimaliser encore les différents avantages considérés ci-dessus. Ces alliages quaternaires sont illustrés par la formule VII:

$$L_{a-ax}T_{ax}Mg_{b-by-}M_{by} \qquad \text{(VII)}$$

dans laquelle les différents éléments et indices présentent les significations indiquées dans la formule I, $x$ et $y$ étant des nombres positifs, compris entre 0 et 1.

Dans les familles d'alliages de magnésium définies ci-dessus, il est avantageux de choisir au moins l'un des symboles utilisés dans les formules parmi les groupes suivants. Ainsi, L fera partie du groupe constitué par La, Ce et un alliage à base de métaux cériques renfermant une quantité prédominante de cérium, et plus spécialement celui commercialisé sous la dénomination mischmétal, T parmi Ca, Sr et Ba, M parmi Al, Zn, Ni, Co, Fe, Ti, V, Mn et Cr, $x$ dans la gamme de 0 à 1 et $y$ voisin de 0, 1.

Les alliages de formules IV à VII évoquées ci-dessus sont des produits nouveaux et font donc partie de l'invention. En vue de leur application comme produits de stockage de l'hydrogène, ceux de ces alliages qui sont riches en magnésium sont préférés, compte tenu notamment des propriétés de désorption satisfaisantes des hydrures auxquels ils donnent lieu.

Le procédé de l'invention conduit à une structure dont la décomposition, dans des conditions de mise en oeuvre aisée, permet de récupérer la majeure partie de l'hydrogène absorbé.

Des groupes d'alliages plus spécialement préférés pour le stockage d'hydrogène dans les familles ci-dessus, possèdent une structure offrant une grande capacité d'accueil pour l'hydrogène.

Dans l'un de ces groupes, tout particulièrement préféré, les indices définissant la stoechiométrie d'une part de L et/ou T, avec d'autre part Mg ou Mg et M sont des nombres respectivement de 1 à 5 et de 12 à 41.

Les alliages de ce groupe dans lesquels ces proportions stoechiométriques sont respectivement voisines de 1 à 12—13, s'avèrent particulièrement intéressants en raison de leur comportement lors de processus d'hydruration.

Des alliages dans lesquels les proportions stoechiométriques des éléments définies par lesdits indices sont respectivement de l'ordre de 5 à 41, donnent lieu à de bonnes performances.

Selon une disposition supplémentaire, il est avantageux de mettre en oeuvre le procédé de l'invention avec un alliage de magnésium répondant à la structure ci-dessus, en mélange avec au moins un autre alliage métallique de magnésium. La présence d'un tel alliage, le cas échéant formé in situ, c'est-à-dire lors de la co-fusion des différents éléments métalliques et du magnésium exerce un effet favorable en particulier sur la vitesse de désorption de l'hydrogène stocké.

La mise en contact des alliages utilisés avec l'hydrogène est réalisée à une température aussi basse que possible, mais permettant d'obtenir dans un temps optimum les hydrures correspondants.

Il est avantageux à cet égard d'opérer à des températures variant de l'ambiante à 450°C environ et sous une pression de 0 à 50 bars environ, la température et la pression choisies étant maintenues de préférence constantes pendant la réaction d'hydruration.

Une étude approfondie du processus d'hydruration des alliages utilisés qui sera illustrée ci-après par les exemples, fait apparaître que dans le domaine de température et de pression étudiées, l'action de l'hydrogène entraîne au cours d'un premier cycle d'hydruration, la décomposition de l'alliage et la formation des hydrures correspondants. Cette décomposition s'effectue selon une réaction irréversible.

A partir du deuxième cycle d'hydruration, on observe une dissociation des hydrures formés, selon laquelle $MgH_2$ libère pratiquement tout l'hydrogène absorbé, les autres hydrures du mélange réactionnel libérant une faible partie de l'hydrogène qu'ils contiennent.

La mise en oeuvre du procédé de l'invention, dans l'industrie, ou les transports, présente un grand intérêt dans le stockage et l'utilisation de l'hydrogène.

Les alliages utilisés permettent de disposer de structures capables de retenir d'importantes quantités d'hydrogène et constituant ainsi des réserves d'hydrogène.

Selon un aspect avantageux de l'utilisation de ces alliages comme réserves d'hydrogène, l'enceinte réactionnelle même, dans laquelle les hydrures ont été formés, peut servir de réservoir d'hydrogène et être utilisée directement pour la récupération de l'hydrogène. De tels réservoirs sont utiles dans de nombreuses applications. En particulier, ils peuvent remplacer, d'une manière avantageuse, les lourdes bouteilles d'hydrogène utilisées dans l'industrie et dans les laboratoires. Le magnésium présent dans les alliages permet en plus du stockage de l'hydrogène sa purification en zote et vapeur d'eau.

Il est également intéressant d'avoir recours à de tels réservoirs pour alimenter des moteurs ou d'autres appareils récepteurs on transformateurs d'énergie, les installations correspondantes entrant également dans le cadre de l'invention.

Une telle installation comprend, par exemple, un élément étanche de stockage d'hydrures à partir duquel on fait déboucher les hydrures dans un réservoir alimentant un moteur. L'hydrogène produit à froid permet de faire démarrer le moteur, dont les gaz brûlés peuvent être utilisés pour faire monter en pression et température le réservoir d'hydrure qui peut alors produire de l'hydrogène à plein régime. En arrêtant le moteur, l'hydrogène qui reste dans le réservoir peut être restitué au mélange d'hydrure qui pourra à nouveau être utilisé pour un démarrage à froid.

Les alliages utilisés dans l'invention peuvent être préparés par toute technique connue. D'une manière avantageuse, on mélange les constituants de l'alliage en proportions stoechiométriques à l'état fondu, notamment à une température de l'ordre de 1.000 à 500°C, puis ou soumet le lingot ainsi obtenu à un recuit à une température avantageusement de l'ordre de 700 à 300°C.

La première étape de fusion et mélange est effectuée dans un creuset formé sous atmosphère de gaz inerte, sans utiliser un flux par exemple d'un halogénure métallique.

Les alliages obtenus peuvent être utilisés directement sous forme de blocs métalliques ou broyés puis réduits en poudre fine éventuellement pastillée.

D'autres caractéristiques et avantages de l'invention apparaîtront dans les exemples qui suivent et en se reportant aux figures auxquelles il est fait référence.

Exemple 1

Préparation de l'alliage $CeMg_{12}$

Dans un creuset en molybdène, on introduit les constituants Ce et Mg selon les proportions permettant d'obtenir la stoechiométrie désirée.

Sous atmosphère d'argon set et désoxygéné, le creuset étant scellé, on forme un mélange par co-fusion de Ce et Mg un les portant pendant environ 1 heure à une température de l'ordre de 700°C.

Le lingot est recuit, pour homogénéisation, pendant environ 15 heures à une température voisine de 500°C, toujours sous atmosphère d'argon sec et désoxygéné.

L'examen cristallographique de l'alliage obtenu montre qu'il possède une structure du type $ThMn_{12}$ qui dérive de $CaCu_5$.

Exemple II

Hydruration de l'alliage $CeMg_{12}$

L'alliage selon l'exemple I, tel qu'obtenu sous forme de block métallique, ou réduit à l'état de poudre, éventuellement pastillée, est mis en contact avec un courant d'hydrogène gazeux à une température de 325°C sous une pression d'hydrogène de 30 bars.

Ce premier cycle d'hydruration, effectué durant environ une heure, conduit à la décomposition irréversible de l'alliage et à la formation des hydrures correspondant à chacun des éléments, selon le schéma réactionnel:

$$CeMg_{12} + \frac{27}{2}H_2 \rightarrow CeH_3 + 12\ MgH_2$$

A partir du 2ème cycle d'hydruration, réalisé dans les mêmes conditions de température et de pression, la réaction s'effectue de façon réversible selon le schéma réactionnel suivant:

$$CeH_3 + 12\ MgH_2 \rightleftharpoons CeH_z + 12\ Mg + \frac{27-z}{2}H_2$$

où $z$ est un nombre de 2,5 à 3,0.

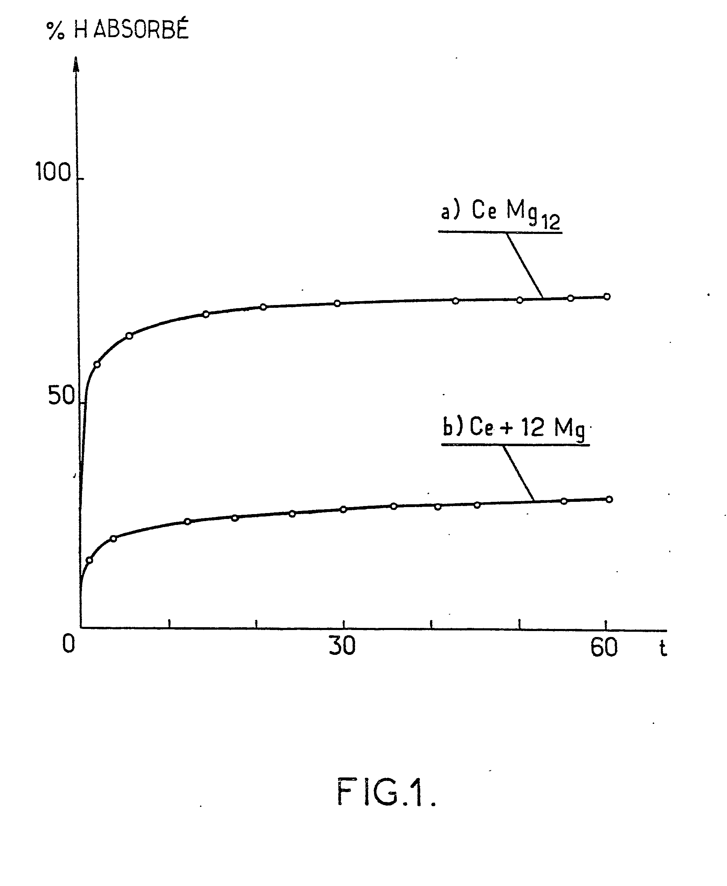

On a représenté sur la figure 1, la courbe d'absorption en hydrogène en fonction du temps, obtenue au deuxième cycle d'hydruration avec l'alliage $CeMg_{12}$ (courbe a).

A titre de comparaison, on a également rapporté la courbe correspondante obtenue avec un mélange de Ce et de Mg en proportions atomiques de 1:12 (courbe b).

On constate, en se reportant à cette figure, que la mise en oeuvre des constituants Ce et Mg sous forme d'un alliage plutôt qu'en mélange permet d'obtenir une plus grande vitesse d'hydruration. L'amélioration de cette performance doit résulter de la répartition plus homogène des constituants dans l'alliage, par comparaison au mélange, et de la granulométrie beaucoup plus fine des particules.

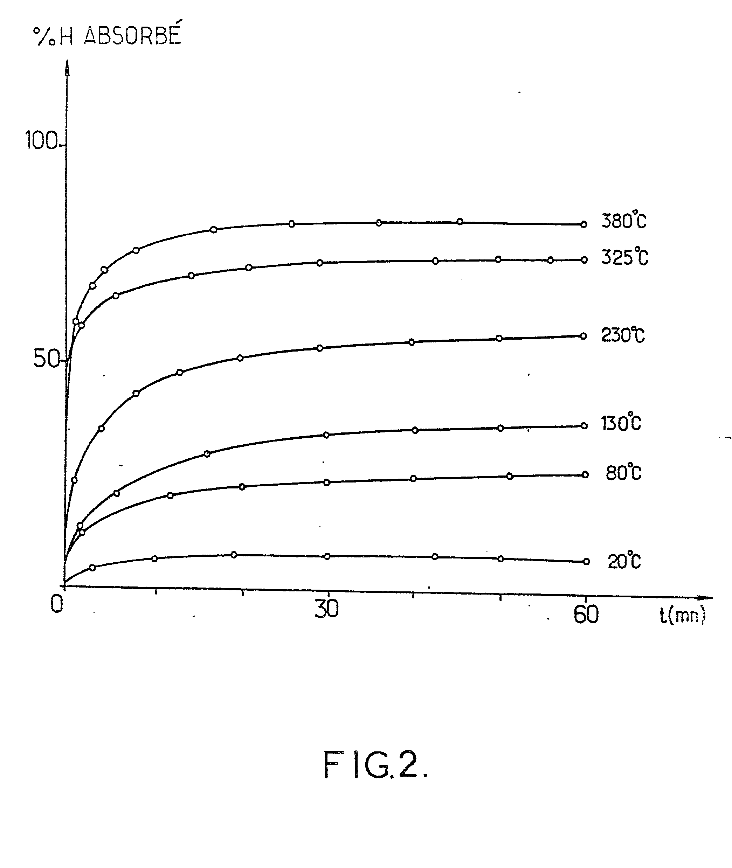

Sur la figure 2, on a représenté les courbes d'absorption d'hydrogène de $CeMg_{12}$, en fonction du temps, obtenues sous une pression d'hydrogène de 30 bars, au deuxième cycle d'hydruration, à diverses températures allant de 20°C à 380°C. L'examen de ces courbes montre que $CeMg_{12}$ présente une vitesse d'hydruration notable dès la température ambiante.

La décomposition thermique des hydrures formés permet de récupérer environ 90% de l'hydrogène fixé par $CeMg_{12}$, qui provient essentiellement de la dissociation thermique de $MgH_2$ formé au cours de l'hydruration.

La capacité massique en hydrogène de l'hydrure est de 4,7% au bout d'une heure.

En opérant selon l'exemple I, on prépare les alliages $LaMg_{12}$ et mischmétal-$Mg_{12}$. L'hydruration de ces alliages dans les conditions rapportées dans l'exemple II conduit à des résultats comparables à ceux indiqués ci-dessus.

Exemple III

Préparation et hydruration de l'alliage

$$La_{1,8}Sr_{0,2}Mg_{17}$$

On prépare ce composé selon le mode opératoire de l'exemple I, puis on le soumet à un premier cycle d'hydruration à 3250°C sous une pression d'hydrogène de 30 bars, ce qui conduit à la décomposition irréversible de l'alliage et à la formation des hydrures correspondant à chacun des éléments selon le schéma réactionnel ci-dessous:

$$La_{1,8}Sr_{0,2}Mg_{17} + 19,9\ H_2 \rightarrow 2\ La_{0,9}Sr_{0,1}H_{2,9} + 17\ MgH_2$$

A partir du deuxième cycle d'hydruration effectué comme précedément, on réalise la réaction réversible suivante:

$$2\ La_{0,9}Sr_{0,1}H_{2,9} + 17\ MgH_2 \rightleftharpoons 17\ Mg + 2\ La_{0,9}Sr_{0,1}H_z + (19,9-z)H_2$$

où z est un nombre de 2,5 à 2,9.

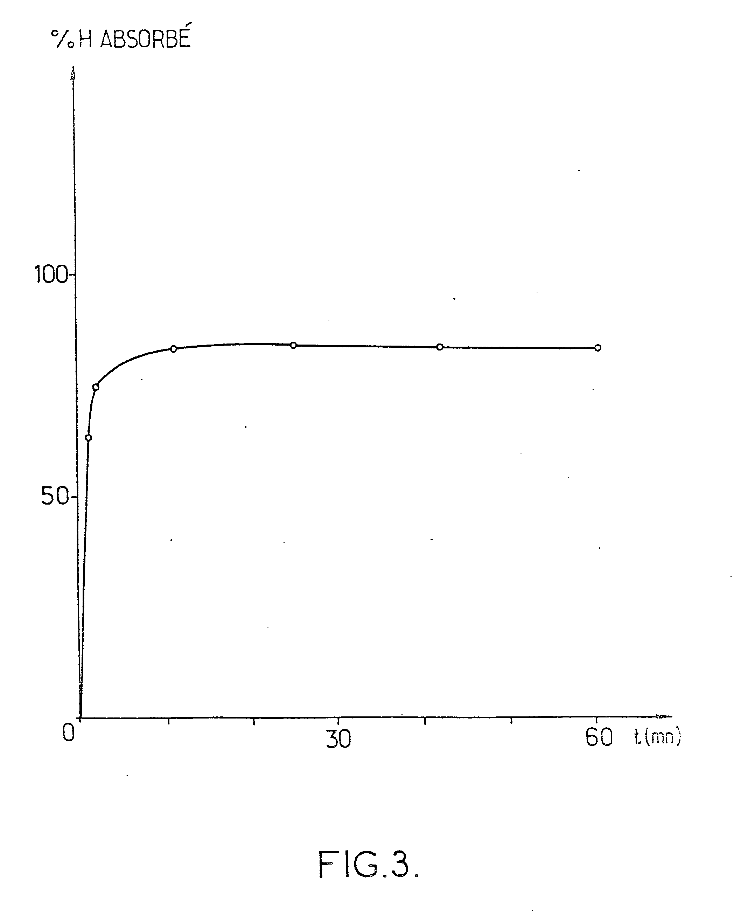

La figure 3, dans laquelle on donne la courbe d'absorption d'hydrogène par l'alliage en fonction du temps au deuxième cycle d'hydruration, met en évidence les performances intéressantes de l'alliage.

On remarque ainsi que pratiquement immédiatement 86% d'$H_2$ sont absorbés.

Au bout d'une heure, la capacité massique en hydrogène des hydrures formés est de 4,8%.

Exemple IV

Préparation et hydruration de l'alliage $Ce_5Mg_{41}$

La préparation et l'hydruration de $Ce_5Mg_{41}$ sont effectuées selon le processus rapporté ci-dessus pour $CeMg_{12}$.

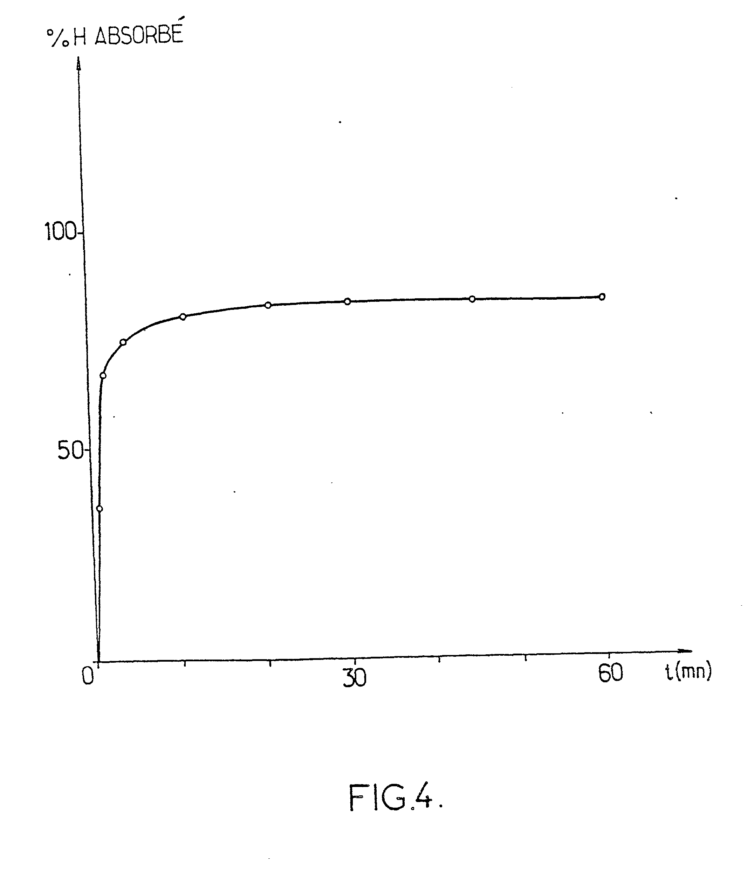

On observe également au premier cycle d'hydruration la décomposition irréversible en hydrures des éléments constitutifs. Sur la figure 4, on a représenté la courbe d'hydrurotation de $Ce_5Mg_{41}$ en fonction du temps au deuxième cycle d'hydruration à 325°C sous une pression d'hydrogène de 30 bars. Les résultats relatifs à l'hydruration sont comparables avec ceux obtenus avec les alliages de magnésium précédents.

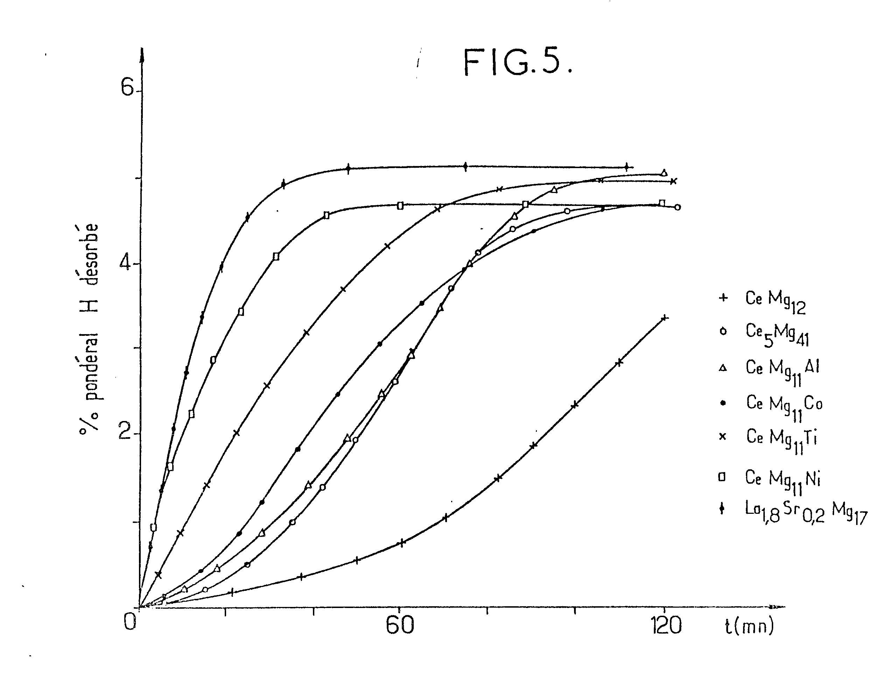

La figure 5 comporte la courbe de désorption d'hydrogène en fonction du temps, à 325°C sous une pression d'hydrogène de 2 bars, des hydrures des éléments constitutifs de l'alliage considéré. L'examen de cette courbe montre que les hydrures formés se dissocient, d'une manière avantageuse, aisément.

Exemple V

Préparation d'alliages de magnésium à partir de Ce, Mg et Ni

La mise en oeuvre, dans la réaction de co-fusion selon l'exemple I, des éléments Ce, Mg et Ni conduit à la formation des phases $Ce_2Mg_{17}$ et $Mg_2Ni$ suivant la processus ci-dessous:

$$2\ Ce + 22\ Mg + 2\ Ni \rightarrow Ce_2Mg_{17} + 2\ Mg_2Ni + Mg$$

Le processus d'hydruration plus particulièrement de $Ce_2Mg_{17}$ est analogue à celui décrit dans l'exemple I relatif à $CeMg_{12}$.

La présence de $Mg_2Ni$ formé "in situ" entraîne une amélioration très sensible de la vitesse de désorption comme le montre la courbe correspondant à ce mélange donnée dans la figure 5.

Exemple VI

Préparation et hydruration de l'alliage $CeMg_{11}Al$

Lors de l'hydruration le comportement de cet alliage est voisin de celui de $CeMg_{12}$. L'action de l'hydrogène conduit à la formation de l'hydrure de cérium et de l'hydrure de magnésium dans lequel l'aluminium est substitué à une faible quantité de magnésium. La présence d'aluminium permet plus particulièrement d'améliorer la vitesse de décomposition de l'hydrure de magnésium comme le montre la courbe correspondante de la figure 5.

On a également rapporté sur cette figure 5 les courbes de désorption d'hydrogène de $CeMg_{11}Co$, $CeMg_{11}Zn$ et $CeMg_{11}Ti$.

L'examen des différentes courbes de la figure met en évidence l'effet favorable des substitutions effectuées sur le magnésium ou sur le lanthanide.

Exemple VII

Application du mélange d'hydrures selon l'exemple 2 pour l'alimentation de moteurs

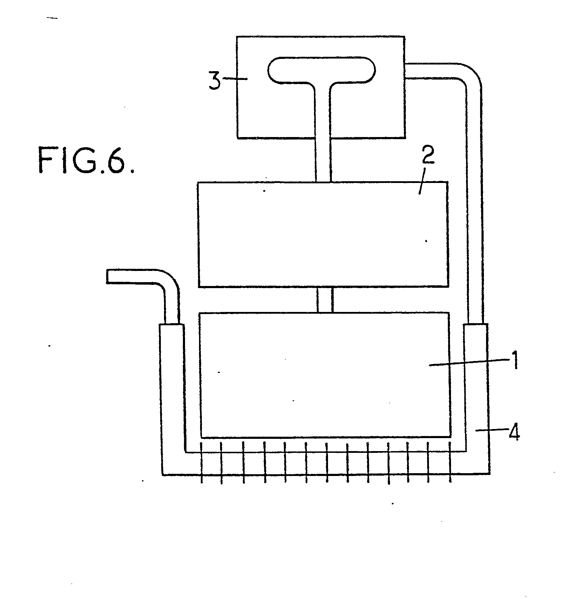

Le mélange d'hydrures $MgH_2$—$CeH_3$ est utilisé pour l'alimentation d'un moteur thermique, selon le schéma représenté sur la figure 6.

Le mélange d'hydrures est contenu dans un premier réservoir étanche 1, qui communique avec un réservoir d'expansion 2, ce dernier alimentant le moteur 3 en hydrogène.

La pression dans le réservoir 2 est par exemple de l'ordre de 2,5 bars, et le débit d'hydrogène suffisant pour permettre le démarrage du moteur.

On prévoit alors un réchauffage de la masse de stockage dans le réservoir 1, par exemple, comme représenté figure 6, par les calories provenant du système d'échappement 4 du moteur, pour réaliser la décomposition de $MgH_2$ qui assure dès lors le fonctionnement du moteur.

Après arrêt du moteur et refroidissement, de ce fait, du réservoir 1, la pression et le volume d'hydrogène disponibles dans le réservoir 2 seront suffisants pour reformer les hydrures qui permettront à nouveau le démarrage suivant.

Les mélanges d'hydrures de l'invention sont également utilisables pour l'alimentation en hydrures de dispositifs électrochimiques, notamment de piles électrochimiques ou de piles à combustible.

Le processus décrit dans l'application ci-dessus peut ici encore être utilisé. Le chauffage du réservoir 1 sera réalisé par effet Joule en empruntant une partie de l'énergie de la pile.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

**Revendications**

1. Procédé pour le stockage d'hydrogène dans des hydrures métalliques, caractérisé par le fait qu'on met en contact de l'hydrogène dans des conditions de température et de pression permettant la formation des hydrures désirée avec au moins un alliage possédant la structure de formule I:

6

$$L_{a-ax}T_{ax}Mg_{b-by}M_{by} \tag{I}$$

dans lequelle:

L représente un élément choisi parmi les lanthanides, plus spécialement, le lanthane (La), le cérium (Ce), le praséodyme (Pr) et le néodyme (Nd), ou encore parmi les alliages à base de cérium,

T représente un élément choisi parmi les métaux du groupe IIa, plus particulièrement parmi le calcium (Ca), le strontium (Sr) et la baryum (Ba),

M représente un élément choisi parmi les métaux de transition, l'aluminium (Al), le silicium (Si) ou l'étain (Sn),

$x$ est un nombre de 0 à 1 compris,

$y$ est un nombre de 0 à 1 compris et $a$ et $b$ sont les indices correspondant à la stoechiométrie des éléments dans l'alliage, sous réserve que, lorsque $x$ et $y$ sont égaux à 0, les indices $a$ et $b$ soient respectivement différents de 1 et 1, 1 et 3, 2 et 17 et, lorsque $x$ est égal à 0 et que $a$ et $b$ sont respectivement égaux à 1 et 2 ou 1 et 3 ou 2 et 17,

M ne représente pas Ni.

2. Procédé selon la revendication 1, caractérise par le fait qu'il comprend la mise en oeuvre d'au moins un alliage binaire de formule II:

$$L_aMg_b \tag{II}$$

dans laquelle L, $a$ et $b$ sont tels que définis dans la revendication 1.

3. Procédé selon la revendication 1, caractérisé par le fait qu'il comprend la mise en oeuvre d'au moins un alliage binaire illustré par la formule III:

$$T_aMg_b \tag{III}$$

dans laquelle T, $a$ et $b$ sont tels que définis dans la revendication 1.

4. Procédé selon la revendication 1, caractérisé par le fait qu'il comprend la mise en oeuvre d'au moins un alliage ternaire de formule IV:

$$L_{a-ax}T_{ax}Mg_b \tag{IV}$$

dans laquelle L, T, $a$ et $b$ présentent les significations sus-indiquées et $x$ est un nombre compris entre 0 et 1.

5. Procédé selon la revendication 1, caractérisé par le fait qu'il comprend la mise en oeuvre d'au moins un alliage ternaire répondant à la formule V:

$$T_aMg_{b-by}M_{by} \tag{V}$$

dans laquelle T, M, $a$ et $b$ sont tels que définis en rapport avec la formule I et $y$ est un nombre non nul, inférieur à 1.

6. Procédé selon la revendication 1, caractérisé par le fait qu'il comprend la mise en oeuvre d'au moins un alliage tertiaire de formule VI:

$$L_aMg_{b-by}M_{by} \tag{VI}$$

dans laquelle L, M, $a$ et $b$ sont tels que définis en rapport avec la formule I et $y$ est un nombre non nul, inférieur à 1.

7. Procédé selon la revendication 1, caractérisé par le fait qu'il comprend la mise en oeuvre d'au moins un alliage quaternaire illustré par la formule VII:

$$L_{a-ax}T_{ax}Mg_{b-by}M_{by} \tag{VII}$$

dans laquelle les différents éléments et indices présentent les significations indiquées dans la formule I, $x$ et $y$ étant des nombres positifs, compris entre 0 et 1.

8. Procédé selon l'une quelconque des revendications précédentes, caractérisé par le fait que L est choisi dans le groupe constitué par La, Cet et un alliage à base de métaux cériques renfermant une quantité prédominante de cérium, et plus spécialement celui commercialisé sous la dénomination mischmétal, T parmi Ca, Sr et Ba, M parmi Al, Zn, Co, Ti, Cr, Mn et V, $x$ dans la gamme de 0 à 1 et $y$ voisin de 0,1.

9. Procédé selon l'une quelconque des revendications 1 à 8, caractérisé par le fait que le fait que les indices définissant la stoechiométrie de L et/ou T d'une part et Mg ou Mg et M, d'autre part, sont des nombres respectivement de 1 à 5 et de 12 à 41.

10. Procédé selon la revendication 9, caractérisé par le fait que les susdits indices sont respectivement voisins de 1 par la proportion stoechiométrique de L et/ou T et voisins de 12 pour celle de Mg ou Mg et M.

11. Procédé selon la revendication 9, caractérisé par le fait que les susdits indices sont respectivement voisins de 5 pour la proportion stoechiométrique de L et/ou T et voisins de 41 pour celle de Mg ou Mg et M.

12. Procédé de préparation des alliages mis en oeuvre dans le procédé selon l'une quelconque des revendications 1 à 11, caractérisé par le fait qu'on mélange les constituants de l'alliage en proportions stoechiométriques à l'état fondu, notamment à une température de l'ordre de 1.000 à 500°C, puis on soumet le lingot ainsi obtenu à un recuit à une température avantageusement de l'ordre de 700 à 300°C.

13. Procédé selon l'une quelconque des revendications 1 à 11, caractérisé par le fait que la réaction avec l'hydrogène est réalisée sous une pression de l'ordre de 0 à 50 bars et à une température allant de la température ambiante à 450°C environ, la température et la pression étant maintenues de préférence constantes pendant ladite réaction.

14. Les alliages ternaires de magnésium de formule IV:

$$La_{a-ax}T_{ax}Mg_b$$

dans laquelle L, T, $a$ et $b$ présentent les significations susindiquées et $x$ est un nombre compris entre 0 et 1; de formule V:

$$T_aMg_{b-by}M_{by}$$

dans laquelle T, M, $a$ et $b$ sont tels que définis en rapport avec la formule I et $y$ est un nombre non nul, inférieur à 1; ou de formule VI:

$$L_aMg_{b-by}M_{by}$$

dans laquelle L, M, $a$ et $b$ sont tels que définis en rapport avec la formule I et $y$ est un nombre non nul, inférieur à 1.

15. Les alliages quaternaires de magnésium de formule VII:

$$L_{a-ax}T_{ax}Mg_{b-by}M_{by}$$

dans laquelle les différents éléments et indices présentent les significations indiquées dans la formule I, $x$ et $y$ étant des nombres positifs, compris entre 0 et 1.

**Patentansprüche**

1. Verfahren zum Speichern von Wasserstoff in Metallhydriden, dadurch gekennzeichnet, daß man Wasserstoff unter Temperatur- und Druckbedingungen, die die Bildung der gewünschten Hydride ermöglichen, mit mindestens einer Legierung in Kontakt bringt, die die Strukturformel I aufweist:

$$L_{a-ax}T_{ax}Mg_{b-by}M_{by} \tag{I}$$

worin

L ein Element darstellt, ausgewählt aus den Lanthaniden und insbesondere dem Lanthan (La), dem Cer (Ce), dem Praseodym (Pr) und dem Neodym (Nd) oder auch aus den Legierungen auf der Basis von Cer,

T ein Element darstellt, ausgewählt aus den Metallen der Gruppe IIa, und insbesondere aus dem Calcium (Ca), dem Strontium (Sr) und dem Barium (Ba),

M ein Element darstellt, ausgewählt aus den Übergangsmetallen, dem Aluminium (Al), dem Silicium (Si) oder dem Zinn (Sn),

x eine Zahl von 0 bis 1 einschließlich ist,

y eine Zahl von 0 bis 1 einschließlich ist und a und b Indizes sind, die der Stöchiometrie der Elemente in der Legierung entsprechen, mit der Maßgabe, daß, wenn x und y gleich 0 sind, die Indizes a und b jeweils unterschiedlich von 1 und 1, 1 und 3, 2 und 17 sind, und wenn x gleich 0 ist, und a und b jeweils gleich 1 und 2 oder 1 und 3 oder 2 und 17 sind, M nicht Ni darstellt.

2. Verfahren nach Anspruch 1, dadurch gekennzeichnet, daß mindestens eine binäre Legierung der Formel II eingesetzt wird

$$L_aMg_b \tag{II}$$

worin L, a und b wie im Anspruch 1 definiert sind.

3. Verfahren nach Anspruch 1, dadurch gekennzeichnet, daß mindestens eine binäre Legierung eingesetzt wird, die durch die Formel III veranschaulicht wird

$$T_aMg_b \qquad\qquad (III)$$

worin T, a und b wie im Anspruch 1 definiert sind.

4. Verfahren nach Anspruch 1, dadurch gekennzeichnet, daß mindestens eine ternäre Legierung der Formel IV eingesetzt wird

$$L_{a-ax}T_{ax}Mg_b \qquad\qquad (IV)$$

worin L, T, a und b die vorstehend angegebenen Bedeutungen aufweisen und x eine Zahl zwischen einschließlich 0 und 1 ist.

5. Verfahren nach Anspruch 1, dadurch gekennzeichnet, daß mindestens eine ternäre Legierung eingesetzt wird, die der Formel V entspricht

$$T_aMg_{b-by}M_{by} \qquad\qquad (V)$$

worin T, M, a und b wie in bezug auf die Formel I definiert sind und y eine Zahl von unterschiedlich 0, kleiner als 1, ist.

6. Verfahren nach Anspruch 1, dadurch gekennzeichnet, daß mindestens einetertiäre Legierung der Formel VI eingesetzt wird

$$L_aMg_{b-by}M_{by} \qquad\qquad (VI)$$

worin L, M, a und b wie in bezug auf die Formel I definiert sind und y eine Zahl von unterschiedlich 0, kleiner als 1, ist.

7. Verfahren nach Anspruch 1, dadurch gekennzeichnet, daß mindestens eine quaternäre Legierung eingesetzt wird, die veranschaulicht wird durch die Formel VII

$$L_{a-ax}T_{ax}Mg_{b-by}M_{by} \qquad\qquad (VII)$$

worin die verschiedenen Elemente und Indizes die in der Formel I angegebenen Bedeutungen aufweisen, x und y positive Zahlen zwischen einschließlich 0 und 1 sind.

8. Verfahren nach einem der vorhergehenden Ansprüche, dadurch gekennzeichnet, daß L ausgewählt wird aus der Gruppe von La, Ce und einer Legierung auf der Basis von Cermetallen, die eine vorwiegende Menge an Cer einschließt, und insbesondere die, die unter der Bezeichnung "mischmetal" handelsüblich ist, T aus Ca, Sr und Ba, M aus Al, Zn, Co, Ti, Cr, Mn und V, x aus dem Bereich von 0 bis 1 und y nahe 0,1.

9. Verfahren nach einem der Ansprüche 1 bis 8, dadurch gekennzeichnet, daß die Indizes, die die Stöchiometrie von L und/oder T einerseits und von Mg oder Mg und M andererseits definieren, Zahlen von 1 bis 5 bzw. von 12 bis 41 sind.

10. Verfahren nach Anspruch 9, dadurch gekennzeichnet, daß die vorstehenden Indizes jeweils nahe 1 für den stöchiometrischen Anteil von L und/oder T und nahe 12 für den von Mg oder Mg und M sind.

11. Verfahren nach Anspruch 9, dadurch gekennzeichnet, daß die vorstehenden Indizes jeweils nahe 5 für den stöchiometrischen Anteil von L und/oder T und nahe 41 für den von Mg oder Mg und M sind.

12. Verfahren zur Herstellung von Legierungen, die bei dem Verfahren gemäß einem der Ansprüche 1 bis 11 eingesetzt werden, dadurch gekennziechnet, daß man die Bestandteile der Legierung in stöchiometrischen Anteilen im geschmolzenen Zustand, insbesondere bei einer Temperatur in der Größenordnung von 1000 bis 500°C vermischt, und anschließend den so erhaltenen Gußblock bei einer Temperatur vorteilhaft in der Größenordnung von 700 bis 300°C tempert.

13. Verfahren nach einem der Ansprüche 1 bis 11, dadurchgekennzeichnet, daß man die Reaktion mit dem Wasserstoff unter einem Druck in der Größenordnung von 0 bis 50 bar und bei einer Temperatur von der Umgebungstemperatur bis etwa 450°C durchführt, wobei die Temperatur und der Druck vorzugsweise während dieser Reaktion konstant gehalten werden.

14. Ternäre Legierungen von Magnesium mit der Formel IV

$$L_{a-ax}T_{ax}Mg_b$$

worin L, T, a und b die vorstehend angegebenen Bedeutungen aufweisen und x eine Zahl zwischen einschließlich 0 und 1 darstellt; mit der Formel V

$$T_aMg_{b-by}M_{by}$$

worin T, M, a und b wie in bezug auf die Formel I definiert sind, und y eine Zahl unterschiedlich 0, kleiner als 1, ist, oder mit der Formel VI

$$L_aMg_{b-by}M_{by}$$

worin L, M, a und b wie in bezug auf die Formel I definiert sind, und y eine Zahl unterschiedlich 0 kleiner als 1 ist.

15. Quaternäre Legierungen von Magnesium mit der Formel VII

$$L_{a-ax}T_{ax}Mg_{b-by}M_{by}$$

worin die verschiedenen Elemente und Indizes die in der Formel I angegebenen Bedeutungen aufweisen und x und y positive Zahlen zwischen einschließlich 0 und 1 sind.

**Claims**

1. A process for storing hydrogen in metal hydrides, comprising contacting hydrogen, under temperature and pressure conditions enabling the formation of the desired hydrides with at least one alloy having the structure of formula I:

$$L_{a-ax}T_{ax}Mg_{b-by}M_{by} \qquad (I)$$

wherein:

$L$ represents a member chosen from the lanthanides, more particularly, lanthanum (La), cerium (Ce), praseodymium (Pr) and neodymium (Nd), or else from cerium based alloys,

$T$ represents a member chosen from the metals of group IIa, more particularly from calcium (Ca), strontium (Sr) and barium (Ba),

$M$ represents a member chosen from the transition metals, aluminium (Al), silicon (Si) or tin (Sn),

$x$ is a number from 0 to 1 inclusive,

$y$ is a number from 0 to 1 inclusive and $a$ and $b$ are indices corresponding to the stoechiometry of the elements of the alloy with the provisos that when $a$ and $y$ are equal to 0, $a$ and $b$ are respectively different from 1 and 1, 1 and 3, 2 and 17 and that when $x$ is equal to 0 and that $a$ and $b$ are respectively equal to 1 and 2, or 1and 3, or 2 and 17, $M$ does not represent Ni.

2. A process according to claim 1, characterized by the fact that it comprises the use of at least one binary alloy of formula II;

$$L_aMg_b \qquad (II)$$

in which $L$, $a$ and $b$ are such as defined in claim 1.

3. A process according to claim 1, characterized by the fact that it comprises the use of at least one binary alloy illustrated by formula III:

$$T_aMg_b \qquad (III)$$

in which $T$, $a$ and $b$ are such as defined in claim 1.

4. A process according to claim 1, characterized by the fact that it comprises the use of at least one ternary alloy of formula IV:

$$L_{a-ax}T_{ax}Mg_b \qquad (IV)$$

in which $L$, $T$, $a$ and $b$ have the above mentioned meanings and $x$ is a number between 0 and 1.

5. A process according to claim 1, characterized by the fact that it comprises the use of at least one ternary alloy corresponding to formula V:

$$T_aMg_{b-by}Mb_y \qquad (V)$$

in which $T$, $M$, $a$ and $b$ are such as defined in relation with formula I and $y$ is a non-zero number, less than 1.

6. A process according to claim 1, characterized by the fact that it comprises the use of at least one tertiary alloy of formula VI:

$$L_aMg_{b-by}M_{by} \qquad (VI)$$

in which $L$, $M$, $a$ and $b$ are such as defined in relation to formula I and $y$ is a non-zero number, less than 1.

7. A process according to claim 1, characterized by the fact that it comprises the use of at least one quaternary alloy illustrated by formula VII:

$$L_{a-ax}T_{ax}Mg_{b-by}M_{by} \qquad (VII)$$

in which the different elements and indices have the meanings indicated in formula I, $x$ and $y$ being positive numbers, between 0 and 1.

8. A process according to any one of the preceding claims, characterized by the fact that $L$ is chosen from the group formed by La, Ce and a ceric metal based alloy including a predominant amount of cerium, and more especially the one commercialized under the mischmetal name, $T$ from Ca, Sr and Ba, $M$ from Al, Zn, Co, Ti, Cr, Mn and $V$, $x$ in the range from 0 to 1 and $y$ close to 0,1.

9. A process according to any one of the preceding claims, characterized by the fact that the indices defining the stoechiometry of $L$ and/or $T$ on the one hand and Mg or Mg and $M$ on the other hand are numbers respectively from 1 to 5 and from 12 to 41.

10. A process according to claim 9, wherein said indices are respectively close to 1 for the stoechiometric proportion of $L$ and/or $T$ and close to 12 for that of Mg or Mg and $M$.

11. A process according to claim 9, wherein said indices are respectively close to 5 for the stoechiometric proportion of $L$ and/or $T$ and close to 41 for that of Mg or Mg and $M$.

12. A process for preparing the alloys used in the process according to any one of claims 1 to 11, characterized by the fact that the components of the alloy are mixed in stoechiometric proportions in the melted state, particularly at a temperature of the order of 1000 to 500°C then the ingot thus obtained is subjected to annealing at a temperature advantageously of the order of 700 to 300°C.

13. A process according to any one of the preceding claims, characterized by the fact that the reaction with the hydrogen is achieved at a pressure of the order of 0 to 50 bars and at a temperature from ambient temperature to about 450°C, the temperature and the pressure being maintained preferably constant during said reaction.

14. The magnesium ternary alloys of formula IV:

$$L_{a-ax}T_{ax}Mg_b \qquad\qquad (IV)$$

in which $L$, $T$, $a$ and $b$ have the above mentioned meanings and $x$ is a number between 0 and 1; of formula V:

$$T_aMg_{b-by}M_{by} \qquad\qquad (V)$$

in which $T$, $M$, $a$ and $b$ are such as defined in relation with formula I and $y$ is a non-zero number, less than 1; or of formula VI:

$$L_aMg_{b-by}M_{by} \qquad\qquad (VI)$$

in which $L$, $M$, $a$ and $b$ are such as defined in relation to formula I and $y$ is a non-zero number, less than 1.

15. The magnesium quaternary alloys of formula VII:

$$L_{a-ax}T_{ax}Mg_{b-by}M_{by} \qquad\qquad (VII)$$

in which the different elements and indices have the meanings indicated in formula I, $x$ and $y$ being positive numbers, between 0 and 1.

FIG.1.

FIG.2.

FIG.3.

FIG.4.

FIG.5.

0 007 840

FIG.6.